# EUROPEAN PATENT SPECIFICATION

(11) **EP 0 267 289 B1**
(45) Date of publication and mention of the grant of the patent: **17.03.1993**
(21) Application number: 87902709.2
(22) Date of filing: 08.04.1987
(51) Int. Cl.: C08L 79/08, C08K 7/02

(54) **POLYIMIDE RESIN COMPOSITION**
POLYIMIDE HARZZUBEREITUNG
COMPOSITION DE RESINE DE POLYIMIDE

(30) Priority: 09.04.1986 JP 80162/86; 28.04.1986 JP 96652/86; 06.05.1986 JP 101932/86; 14.05.1986 JP 108513/86
(43) Date of publication of application: 18.05.1988
(73) Proprietor: MITSUI TOATSU CHEMICALS, Inc., Chiyoda-Ku Tokyo 100 (JP)
(72) Inventor: YAMAYA, Norimasa, Yokohama-shi Kanagawa 244 (JP); KOGA, Nobuhito, Yokohama-shi Kanagawa 247 (JP); BABA, Kenichi, Kanagawa 241 (JP)
(74) Representative: Hayward, Denis Edward Peter
(86) International application number: PCT/JP87/00218
(87) International publication number: WO 87/06251

(56) References cited:
- JP-A- 4 717 856
- JP-A-59 168 030
- JP-B-25 950 691
- "Taschenbuch der Kunstoff-Additive "Carl Harser Verlag München, 1979, p.328-335,344-349.
- "Elias/VOH WINKEL "Neue polymere Werkstoffe" 1983, p.271-274.

## Description

This invention relates to a novel polyimide resin composition having excellent high-temperature stability, dimensional stability and mechanical strength.

Polyimide obtained by reacting tetracarboxylic acid dianhydride with diamine is hereafter expected to have wide use in areas where high-temperature stability is required, because of its various excellent properties and good thermal stability.

Many polyimides which have so far been developed exhibit excellent properties and yet they have an outstanding high-temperature stability accompanied by poor processability. On the other hand, a resin developed for improved processability is inferior in high-temperature stability and solvent resistance. Thus the performance of polyimide has both merits and drawbacks.

An object of this invention is to provide a new polyimide resin composition having excellent high-temperature stability, as well as dimensional stability and mechanical strength.

The present inventors have investigated extensively to achieve this objective and they have found that a polyimide resin composition comprising polyimide and a specific amount of fibrous reinforcing material is particularly beneficial.

According to the invention, there is provided a polyimide resin composition which comprises 100 parts by weight of a polyimide having recurring units of the following formula (I): 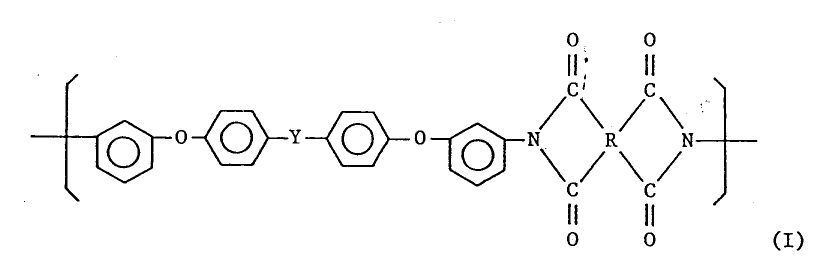
where Y is a direct bond, or a radical selected from divalent hydrocarbon radicals having from 1 to 10 carbons, hexafluorinated isopropylidene radicals, carbonyl radicals, thio radicals, sulfinyl radicals, sulfonyl radicals, and oxygen, and R is a tetravalent radical selected from aliphatic radicals having 2 or more carbons, cycloaliphatic radicals, monocyclic aromatic radicals, fused polycyclic aromatic radicals, and polycyclic aromatic radicals wherein the aromatic rings are connected to one another by a direct bond or by a bridging radical; the composition containing also a fibrous reinforcing material present in an amount of 5 to 100 parts by weight, except in the case of potassium titanate fibre for which the limits are 5 to 200 parts by weight.

The polyimide which is used may be prepared by conducting a dehydrating ring-closure in respect of polyamic acid obtained by reacting an ether-diamine represented by the following formula (IV): 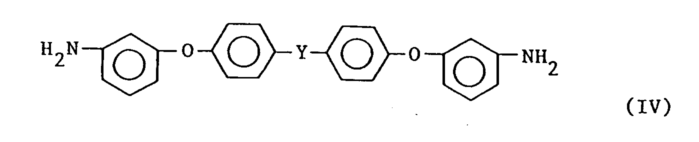
where Y is a direct bond, or a radical selected from divalent hydrocarbon radicals having from 1 to 10 carbons, hexafluorinated isopropylidene radicals, carbonyl radicals, thio radicals, sulfinyl radicals, sulfonyl radicals, and oxygen, with a tetracarboxylic acid dianhydride represented by the following formula (V) 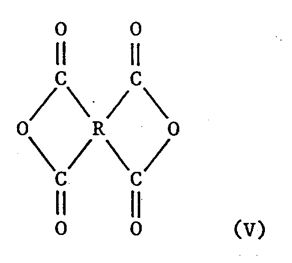
where R is a tetravalent radical selected from aliphatic radicals having 2 or more carbons, cycloaliphatic radicals, monocyclic aromatic radicals, fused polycyclic aromatic radicals, and polycyclic aromatic radicals wherein the aromatic rings are connected to one another by a direct bond or by a bridging radical.

The ether-diamines that can be used for the method include, for example, bis[4-(3-aminophenoxy)phenyl]methane, 1,1-bis[4-(3-aminophenoxy)phenyl]ethane, 1,2-[4-(3-aminophenoxy)phenyl]ethane, 2,2-bis[4-(3-aminophenoxy)phenyl]propane, 2,2-bis[4-(3-aminophenoxy)phenyl]butane, 2,2-bis[4-(3-aminophenoxy)phenyl]-1,1,1,3,3,3-hexafluoropropane, 4,4'-bis(3- aminophenoxy)biphenyl, bis[4-(3-aminophenoxy)phenyl] ketone, bis[4-(3-aminophenoxy)phenyl] sulfide, bis[4-(3-aminophenoxy)phenyl] sulfoxide, bis[4-(3-aminophenoxy)phenyl] sulfone and bis[4-(3-aminophenoxy)phenyl] ether. These diamines can be used alone or in mixtures of two or more.

Particularly preferred ether-diamines are 4,4'-bis-(3-aminophenoxy)biphenyl, 2,2-bis[4-(3-aminophenoxy)phenyl]propane and bis[4-(3-aminophenoxy)phenyl] sulfide.

Tetracarboxylic acid dianhydrides that can be used in the method include, for example, ethylenetetracarboxylic dianhydride, cyclopentanecarboxylic dianhydride, pyromellitic dianhydride, 3,3',4,4'-benzophenonetetracarboxylic dianhydride, 2,2',3,3'-benzophenonetetracarboxylic dianhydride, 3,3',4,4'-biphenyltetracarboxylic dianhydride, 2,2',3,3'-biphenyltetracarboxylic dianhydride, 2,2-bis(3,4-dicarboxyphenyl)propane dianhydride, 2,2-bis(2,3-dicarboxyphenyl)propane dianhydride, bis(3,4-dicarboxyphenyl) ether dianhydride, bis(3,4-dicarboxyphenyl) sulfone dianhydride, 1,1-bis(2,2-dicarboxyphenyl)ethane dianhydride, bis(2,3-dicarboxyphenyl)methane dianhydride, bis(3,4-dicarboxyphenyl)methane dianhydride, 2,3,6,7-naphthalenetetracarboxylic dianhydride, 1,4,5,8-naphthalenetetracarboxylic dianhydride, 1,2,5,6-naphthalenetetracarboxylic dianhydride, 1,2,3,4-benzenetetracarboxylic dianhydride, 3,4,9,10-perylenetetracarboxylic dianhydride, 2,3,6,7-anthracenetetracarboxylic dianhydride and 1,2,7,8-phenanthrenetetracarboxylic dianhydride. These tetracarboxylic acid dianhydrides can be used alone or in mixtures of two or more.

Particularly prefered tetracarboxylic acid dianhydrides are pyromellitic dianhydirde and 3,3',4,4'-benzophenonetetracarboxylic dianhydride.

The ether-diamine and tetracarboxylic acid dianhydride are ordinarily reacted by known procedures to give a polyamic acid having recurring units of the following formula (VI): 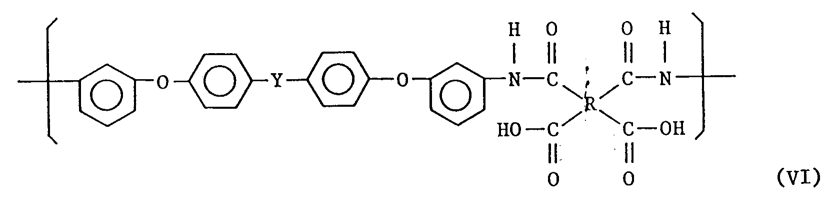
(where R is the same as above)
and subsequently imidizing by a usual method to obtain polyimide having recurring units of the following formula (I): 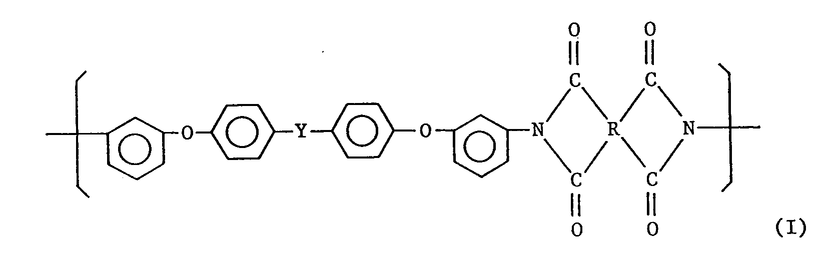
(where R is the same as above).

In the practice of the present invention, particularly preferred polyimides having recurring units of the above formula (I) include:
(a) A polyimide having the above formula (I) wherein Y is a direct bond and R is represented by the following formula (II): 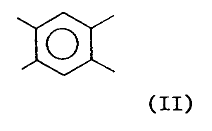 which is obtained by using 4,4'-bis(3-aminophenoxy)biphenyl as the diamine and pyromellitic dianhydride as the tetracarboxylic acid dianhydride;
(b) A polyimide having the above formula (I) wherein Y is an isopropylidene radical and R is represented by the following formula (III): 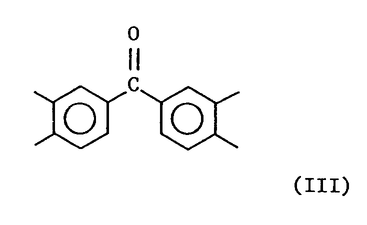 which is obtained by using 2,2-bis[4-(3-aminophenoxy)phenyl]propane as the diamine and 3,3', 4,4'-benzophenonetetracarboxylic dianhydride as the tetracarboxylic acid dianhydride;
(c) A polyimide having the above formula (I) wherein Y is a thio radical and R is represented by the following formula (II): 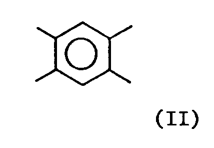 which is obtained by using bis[4-(3-aminophenoxy)phenyl] sulfide as the diamine and pyromellitic dianhydride as the tetracarboxylic acid dianhydride; and
(d) A polyimide having the above formula (I) wherein Y is a thio radical and R is represented by the following formula (III): 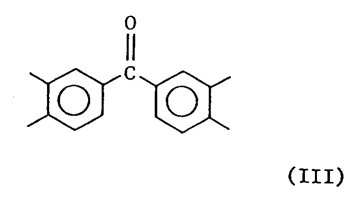 which is obtained using bis[4-(3-aminophenoxy)phenyl] sulfide as the diamine and 3,3', 4,4'-benzophenonetetracarboxylic dianhydride as the tetracarboxylic acid dianhydride.

A variety of fibrous reinforcing materials can be used for the practice of this invention. The materials include, for example, glass fibre, carbon fibre, potassium titanate fibre, aromatic polyamide fibre, silicone carbide fibre, alumina fibre, boron fibre, and ceramic fibre. Particularly preferred fibres are glass fibre, carbon fibre, potassium titanate fibre and aromatic polyamide fibre.

Glass fibre for use in the practice of this invention can be made by various processes of quenching and drawing molten glass to obtain a fine fibre having a predetermined diameter. The term glass fibre further includes strands prepared by bundling together monofilaments using a bundling agent, and roving prepared by laying parallel and bundling such strands. Any of these fibre materials can be used. In order to obtain affinity with the base resin, the glass fibre may be processed with surface-treating agents which include silane coupling agents such as aminosilane or epoxysilane, chromic chloride and other treating agents.

The length of the glass fibre has a remarkable effect on the properties of the molded articles obtained and the workability of the resin composition in manufacturing such molded articles. When the fibre length is increased, the properties of the molded articles are generally improved, and yet, on the contrary, the workability in manufacturing becomes poor. Therefore the length of the glass fibre in the practice of this invention is preferably in the range of 0.1-6mm, and more preferably in the range of 0.3-4mm, because within this range both the properties of the molded articles and the workability in manufacturing are in a good balance.

Carbon fibre for use in the practice of this invention includes high-modulus and high-strength fibre obtained by carbonizing primarily polyacrylonitrile, petroleum pitch and the like. Both acrylonitrile-based and petroleum pitch-based materials are suitable. The carbon fibre may be chosen with a suitable diameter and aspect ratio (ratio of length/diameter) on the basis of the desired reinforcing effect and mixing ability. The diameter of the carbon fibre is normally in the range of from 5 to 20 µm and more preferably 8 to 15 µm. The aspect ratio ranges normally from 1 to 600, and more preferably from about 100 to about 350, according to the mixing ability and reinforcing effect desired. Too small an aspect ratio gives no reinforcing effect and an excessive aspect ratio reduces the mixing ability and inhibits the obtaining of good molded articles. The surface of the carbon fibre may be processed with various treating agents which include, for example, epoxy resin, polyamide resin, polycarbonate resin, polyacetal resin and other known surface treating agents.

Potassium titanate fibre is a type of high strength fibre (whisker) of needle crystals having a chemical composition of fundamentally K₂O.6TiO₂, K₂O.6TiO₂.1/2 H₂O and a typical melting point of 1,300-1,350°C. The fibre is amplified in an average length of 5-50 µm and an average diameter of 0.05-1.0 micron, and more preferably an average length of 20-30 µm and an average diameter of 0.1-0.3 µm. Although the potassium titanate fibre can normally be used in an untreated state, it may also be surface-treated in order to have affinity with the base resin. Silane coupling agents such as aminosilane and epoxysilane, chromic chloride and other surface treating agents may be used according to the desired object.

Aromatic polyamide fibre is a relatively new organic fibre developed for high-temperature stability and expected to find use in a wide field due to its unique characteristics. Typical examples of the resin include those having the following chemical structures. Such resins can be used alone or in a combination of two and more. 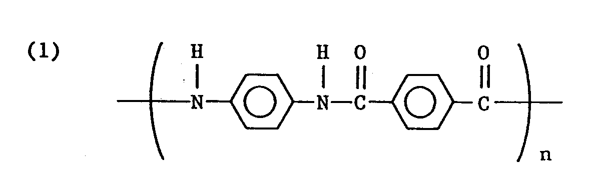
Example: Trade Mark; Kevlar, from E.I. du Pont de Nemours & Co. 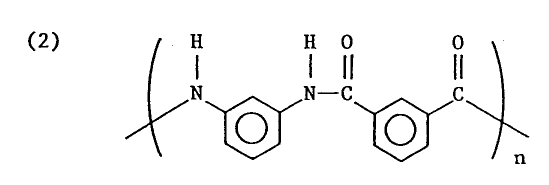
Example: Trade Mark; Nomex, from E.I. du Pont de Nemours & Co.
Trade Mark; Conex, from TEIJIN 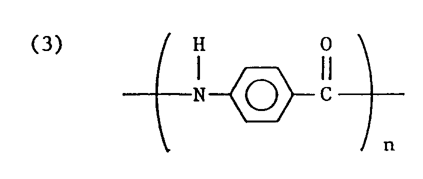
There are man other aromatic polyamide fibres having various polymer chains of ortho-, meta-, or para-isomeric structure. Among them, the type (1) resin having para-para located linkages exhibits a high softening point and melting point and is the most preferable for use in this invention as the high-temperature stable organic fibre.

The fibrous reinforcing material is used in an amount of 5-100 parts by weight, and more preferably 10-50 parts by weight per 100 parts by weight of the polyimide. In the case of glass fibre and carbon fibre, an amount of less than 5 parts by weight cannot give the reinforcing effect which is desired from glass fibre or carbon fibre. On the other hand, the use of more than 100 parts by weight decreases the flowability of the composition during molding and it becomes difficult to obtain satisfactory articles.

Potassium titanate fibre is used in an amount of 5-200 parts by weight, more preferably 5-100 parts by weight per 100 parts by weight of the polyimide fibre. An amount of less than 5 parts by weight cannot give the improved mechanical properties at high-temperatures which are desired from this invention. On the other hand, the use of more than 200 parts by weight is undesirable because of insufficient dispersion occurs in the molten mixture, the flowability decreases and molding under normal conditions becomes difficult.

Aromatic polyamide fibre is used in an amount of 5-100 parts by weight, more preferably 10-50 parts by weight per 100 parts by weight of the polyimide resin. An amount of less than 5 parts by weight cannot give a composition excellent in moldability and mechanical strength as desired from this invention. The use of more than 100 parts by weight remarkably improves the flowability of the composition during molding but the heat-distortion temperature drops and thus satisfactory high-temperature stability cannot be obtained.

The polyimide composition can be prepared by the usual known methods and by the following methods in particular.
(1) The polyimide powder and the fibrous reinforcing material are premixed by using a mortar, Henshel mixer, drum blender, tumbler blender, ball mill, ribbon blender etc. The resultant mixture is then kneaded with a known fusion mixer or hot roll to form pellets or powder.
(2) The polyimide powder is first dissolved or suspended in an organic solvent. The fibrous reinforcing material is immersed in the resultant solution or suspension and then the solvent is removed in a hot air oven. The residual mass is pelletized or powdered.
   The organic solvents that can be used in this method include, for example, N,N-dimethylformamide, N,N-dimethylacetamide, N,N-diethylacetamide, N,N-dimethyl-methoxyacetamide, N-methyl-2-pyrrolidone, 1,3-dimethyl-2-imidazolidinone, N-methylcaprolactam, 1,2-dimethoxyethane, bis(2-methoxyethyl) ether, 1,2-bis(2-methoxyethoxy)ethane, bis[2-(2-methoxyethoxy)ethyl] ether, tetrahydrofuran, 1,3-dioxane, 1,4-dioxane, pyridine, picoline, dimethyl sulfoxide, dimethyl sulfone, tetramethylurea and hexamethylphosphoramide These solvents can be used alone or in mixtures of two or more.
(3) The polyamic acid precursor of the polyimide having recurring units of the formula (VI) is dissolved in an afore-mentioned organic solvent. The fibrous reinforcing material is impregnated with the resultant solution and then subjected to a heat treatment at a temperature of 100-400°C or to chemical imidization with one of the usual imidizing agents. The solvent is then removed and the residue is pelletized or powdered.

In addition, at least one antioxidant, heat stabilizer, ultra violet absorber, flame retardant, antistatic agent, lubricant, colorant or other ordinary additive may be added to the composition in a quantity that will not hinder the achievement of the objects of this invention.

Other materials which may be blended into the mix in a proper amount, depending upon the object to be achieved, include thermoplastic resin (for example, polyethylene, polypropylene, polyamide, polycarbonate, polysulfone, polyethersulfone, polyetheretherketone, modified polyphenylene oxide; and polyphenylene sulfide), thermosetting resin (for example, phenolic resin, and epoxy resin) and fillers such as clay, mica, silica, graphite, glass beads, alumina, and calcium carbonate.

The polyimide resin composition of this invention may be molded by known processing methods such as injection molding, extrusion molding, compression molding, rotation molding etc.

### EXAMPLES

The practice of the present invention will now be further explained with reference to the following Synthesis examples, Product Preparation Examples and Comparative Examples.

### Synthesis Example 1

A 3 liter glass reaction vessel was charged with 186 grams (1.0 mol) of 4,4'-dihydroxybiphenyl, 438 grams (2.6 mols) of m-dinitrobenzene, 363 grams of potassium carbonate and 2,000 ml of N,N-dimethylformamide. The mixture was reacted at a temperature of 145-150°C for 16 hours. After completion of the reaction, the resultant mixture was cooled and filtered to remove potassium nitrite. The solvent was distilled off from the filtrate under reduced pressure. The residue was cooled to 65°C, 2,000 ml of methanol were added and the mixture stirred for an hour. The resultant cystals were filtered, washed with water, washed with methanol and dried to obtain 426 grams (99.5% yield) of 4,4'-bis(3-nitrophenoxy)biphenyl as brown crystals.

In the next step, a 1 litre glass reaction vessel was charged with 100 grams (0.23 mol) of crude 4,4'-bis(3-nitrophenoxy)biphenyl, 10 grams of active carbon, 1 gram of ferric chloride hexahydrate and 500 ml of 2-methoxyethanol. The mixture was stirred for 30 minutes under reflux and then 46 grams (0.92 mol) of hydrazine hydrate were added dropwise during a period of 3 hours at 70-80°C. The reaction continued to termination by stirring for 5 hours at 70-80°C after the end of the dropwise addition. The reaction mixture was cooled, filtered to remove the catalyst and poured into 500 ml of water. The separated crystals were filtered, 48 grams of 35% hydrochloric acid and 540 ml of 50% isopropyl alcohol were added and the mixture warmed. The solution thus obtained was allowed to cool. The separated 4,4'-bis(3-aminophenoxy)biphenyl hydrochloride was filtered, 540 ml of 50% isopropyl alcohol were added and the mixture warmed. The solution thus obtained had 5 grams of active carbon added and was then filtered and neutralized with aqueous ammonia. The separated crystals were filtered, washed with water and dried to give 72.0 grams (85% yield) of 4,4'-bis(3-aminophenoxy)biphenyl as colorless crystals having a melting point of 144-146°C. The purity was 99.6% according to high-speed liquid chromatography.

| Elemental analysis : C₂₄ H₂₀N₂ O₂ | | | |
|---|---|---|---|
| | C | H | N |
| Calculated (%) | 78.26 | 5.43 | 7.61 |
| Found (%) | 78.56 | 5.21 | 7.66 |

- MS : 368 (M⁺):: 340, 184
- IF (KBr.cm⁻¹) :: 3400 and 3310 (amino group),
1240 (ether linkage)

### Synthesis Example 2

A 1 liter glass reaction vessel was charged with 85.6 grams (0.375 mol) of 2,2-bis(4-hydroxyphenyl)propane, 151.2 grams (0.9 mol) of m-dinitrobenzene, 124.6 grams of potassium carbonate and 660 ml of N,N-dimethylformamide. The mixture was reacted for 10 hours at a temperature of 145-150°C. After completion of the reaction, the resultant mixture was cooled and filtered to remove potassium nitrite. The solvent was distilled off from the filtrate under reduced pressure. The residue was cooled to 65°C, 450 ml of methanol were added and the mixture stirred for an hour. The resultant crystals were filtered, washed with water, washed with methanol, and dried to obtain 164.8 grams (93.5% yield) of 2,2-bis(4-(3-nitrophenoxy)phenyl]propane as yellow brown crystals.

In the next step, a 500 ml glass reaction vessel was charged with 100 grams (0.21 mol) of 2,2-bis[4-(3-nitrophenoxy)phenyl]propane, 10 grams of active carbon, 1 gram of ferric chloride hexahydrate and 300 ml of 2-methoxyethanol. The mixture was stirred for 30 minutes under reflux and then there were added dropwise 42 grams (0.84 mol) of hydrazine hydrate over a period of 2 hours at 70-80°C. The reaction mixture was further stirred for 5 hours at 70-80°C, cooled, filtered to remove the catalyst, and 150 ml of 2-methoxyethanol was distilled off. The residue thus obtained had added to it 270 grams of 20% aqueous hydrochloric acid solution and also 30 grams of sodium chloride, and was cooled to 20-25°C with stirring. The separated crystals were filtered and neutralized in 30% isopropyl alcohol with aqueous ammonia. The separated cystals were then filtered, washed with water, dried and recrystallized from a solvent mixture of benzene and n-hexane.

The 2,2-Bis[4-(3-aminophenoxy)phenyl]propane thus obtained was 69.2 grams (75% yield) in amount and in the form of colorless crystals having a melting point of 106-108°C. The purity was 99.5% according to high-speed liquid chromatography.

| Elemental analysis : C₂₇ H₂₆ N₂ O₂ | | | |
|---|---|---|---|
| | C | H | N |
| Calculated (%) | 79.02 | 6.34 | 6.83 |
| Found (%) | 79.21 | 6.40 | 6.71 |

- MS : 470 (M⁺):: 455 (M-Ch₃)+
- IR (KBr.cm⁻¹) :: 3460 and 3370 (amino group),
1220 (ether linkage)

### Synthesis Example 3

A 3 liter glass reaction vessel was charged with 218 grams (1 mol) of bis(4-hydroxyphenyl) sulfide, 403 grams (2.4 mols) of m-dinitrobenzene, 331 grams (2.4 mols) of potassium carbonate and 2.5 l of N,N-dimethylformamide. The mixture was reacted for 20 minutes at a temperature of 145-150°C. After completion of the reaction, the resultant mixture was cooled, filtered and the solvent was distilled from the filtrate under reduced pressure. The residue thus obtained was cooled to 65°C, 800 ml of methanol was added and the mixture stirred for an hour. The crystals obtained were filtered, washed with methanol and dried to give 429 grams (92.3% yield) of bis[4-(3-nitrophenoxy)phenyl] sulfide as crystals.

In the next step, 428 grams (0.93 mol) of the crude intermediate was charged into a 3 l glass reaction vessel and 22.6 grams of active carbon, 0.9 gram of ferric chloride hexahydrate and 1.5 l of 2-methoxyethanol were added. The mixture was stirred for 30 minutes under reflux, and then 115.2 grams (3.1 mols) of hydrazine hydrate was added dropwise over a period of 2 hours at 110-115°C. The resultant mixture was further stirred for 3.5 hours under reflux, cooled and filtered to remove the catalyst. The filtrate was concentrated under reduced pressure and had added to it 205 ml of 35% hydrochloric acid, 1,120 ml of water and 480 ml of isopropyl alcohol. The mixture was warmed to obtain a solution, 20 grams of active carbon were added and the mixture was then hot filtered. The filtrate then had added to it 112 grams of sodium chloride and after cooling the separated hydrochloride crystals were filtered. The hydrochloride crystals were neutralized with aqueous ammonia by a normal procedure to obtain 265 grams (66% yield) of bis[4-(3-aminophenoxy)phenyl] sulfide as colorless crystals having a melting point of 112-113°C (corr.). The purity was higher than 99.9%.

| Elemental analysis : C₂₄ H₂₀ N₂ O₂ S | | | | |
|---|---|---|---|---|
| | C | H | N | S |
| Calculated (%) | 71.97 | 5.03 | 7.00 | 8.01 |
| Found (%) | 71.90 | 4.54 | 6.92 | 7.72 |

- MS (FD) :: 400 (M⁺)
- IR (KBr.cm⁻¹) :: 3390 and 3300 (amino group),
1220 (ether linkage)

### Examples 1-6

A reaction vessel equipped with a stirrer, reflux condenser and nitrogen inlet tube was charged with 36.8 kilograms (100 mols) of 4,4'-(3-aminophenoxy)biphenyl and 175,8 kilograms of N,N-dimethylacetamide. The mixture had added to it portion by portion 21.8 kilograms (100 mols) of pyromellitic dianhydride at room temperature under a nitrogen atmosphere with care taken to prevent temperature rise of the mixture, and the mixture stirred for about 20 hours at room temperature. The polyamic acid thus obtained had an inherent viscosity of 2.47 dl/g. The inherent viscosity is a value measured at 35°C in a concentration of 0.5 gram of sample/100 ml of solvent using N,N-dimethylacetamide as the solvent.

In the next step 150 kilograms of the above polyamic acid solution had added to it 337.5 kilograms of N,N-dimethylacetamide, and the mixture was warmed to 70°C with stirring under a nitrogen atmosphere, after which 26.1 kilograms (26 mols) of acetic anhydride and 9.05 kilograms (9 mols) of triethylamine were added dropwise. Yellow polyimide powder started to separate about 10 minutes after the end of the dropwise addition, and the mixture was further stirred for 2 hours with warming and then hot filtered. The polyimide powder thus obtained was washed with methanol and dried at 150°C for 5 hours under reduced pressure to afford 34.5 kilograms (98% yield) of polyimide powder.

To 100 parts by weight of the polyimide powder above obtained, silane treated glass fibre 3mm in length and 13 µm in diameter (Trade Mark; CS-3PE-476S, from Nitto Boseki) was added in the respective amount for such Example given in Table 1 and the two were mixed in a drum blender (from Kawata Seisakusho). The resultant mixture was kneaded in a molten state at a temperature of 390°C in a single screw extruder having a 30mm apperture. The strand thus formed was air cooled and cut into pellets.

The pellets obtained were injection molded with an Arburg injection molding machine having a maximum mold clamping force of 35 tons under the following conditions; injection pressure 500 kg/cm², cylinder temperature 400°C and mold temperature 180°C. Specimens thus prepared were then tested. The results are given in Table 1. The following physical properties were measured in accordance with ASTM Testing methods.

| | | |
|---|---|---|
| Tensile strength | ASTM | D-638 |
| Flexural modulus | ASTM | D-790 |
| Flexural strength | ASTM | D-790 |
| Notched Izod impact strength | ASTM | D-256 |
| Heat distortion temperature | ASTM | D-648 |
| Molding shrinkage | ASTM | D-955 |

### Example 7

To 100 parts by weight of the polyimide powder obtained by the procedure of Example 1, 150 parts by weight of N,N-dimethylacetamide were added to make a suspension. In the suspension were uniformly dispersed 30 parts by weight of silane-treated glass fibre having a length of 3mm and a diameter of 13 µm (Trade Mark; CS-3PE-476S, from Nitto Boseki). After preliminary drying of the resultant mixture in a hot air oven at 200°C for 20 hours, it was further dried in a vacuum desiccator at 150°C for 5 hours under reduced pressure in order to completely remove the solvent The polyimide impregnated glass fibre product thus obtained was pelletized and injection molded by the same procedure as in Examples 1-6 to obtain specimens for testing as to their physical properties. The physical properties were tested by the same procedures as in Examples 1-6 and the results are given in Table 2.

### Example 8

30 parts by weight of the same glass fibre as used in Examples 1-6 were dipped into 400 parts by weight of the polyamic acid solution obtained by the same procedure as in Example 1. Then the drying procedure of Example 7 was repeated to obtain a polyimide impregnated glass fibre product. This product was processed for testing by the same procedures as in Example 7 and the results are given in Table 2.

### Examples 9-11 and Comparative Examples 1-3

To 100 parts by weight of the polyimide powder derived from the diamine and tetracarboxylic dianhydride which are given for each of Examples 9-11 in Table 2, the same glass fibre as used in Examples 1-6 was added in the amount given in Table 2. The same procedures as in Examples 1-6 were carried out to obtain the results in Table 2.

In addition, results obtained by using the glass fibre in amounts outside the scope of this invention are also given in Table 3 as Comparative Examples.

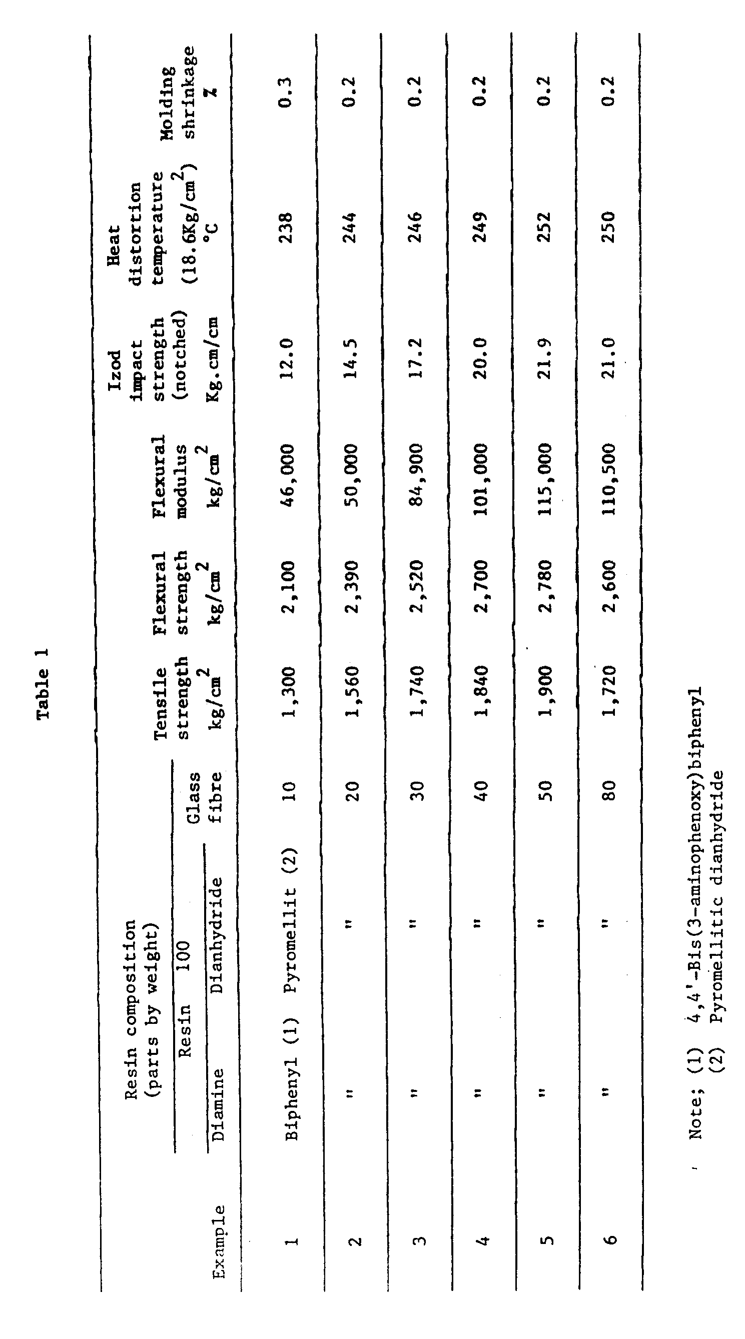

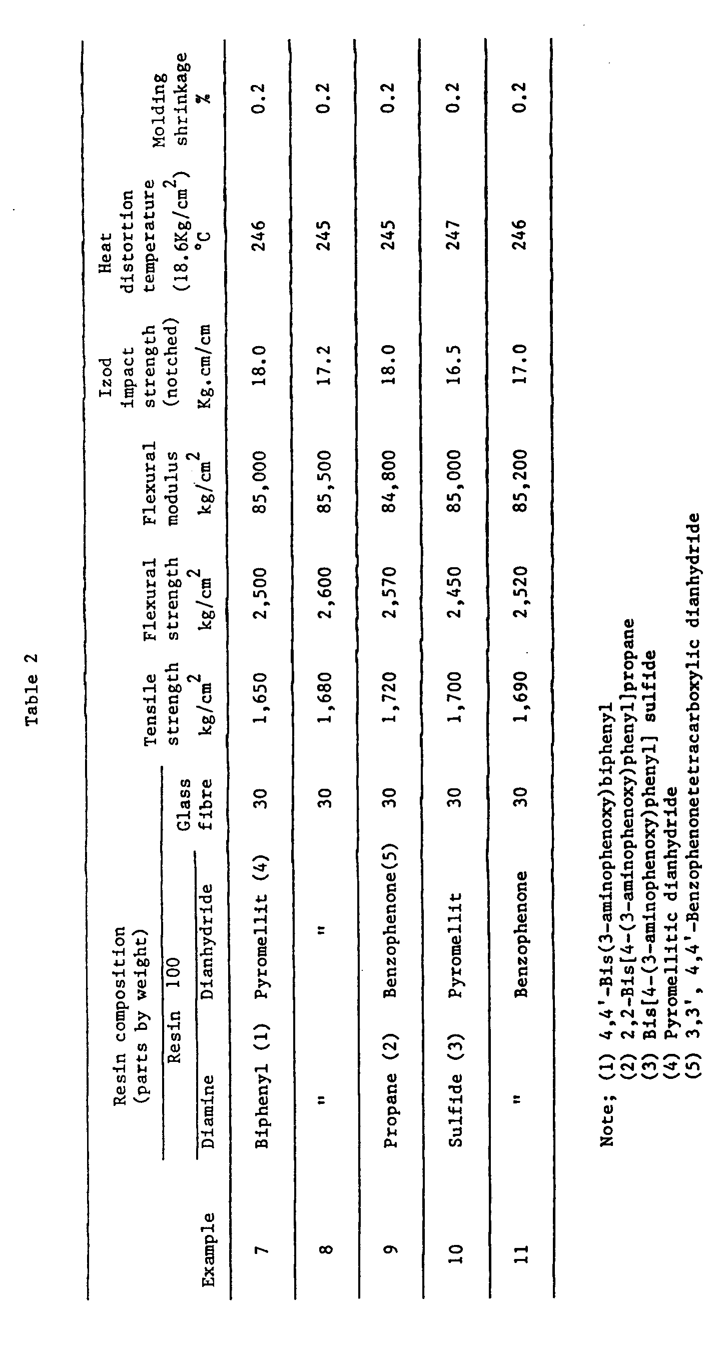

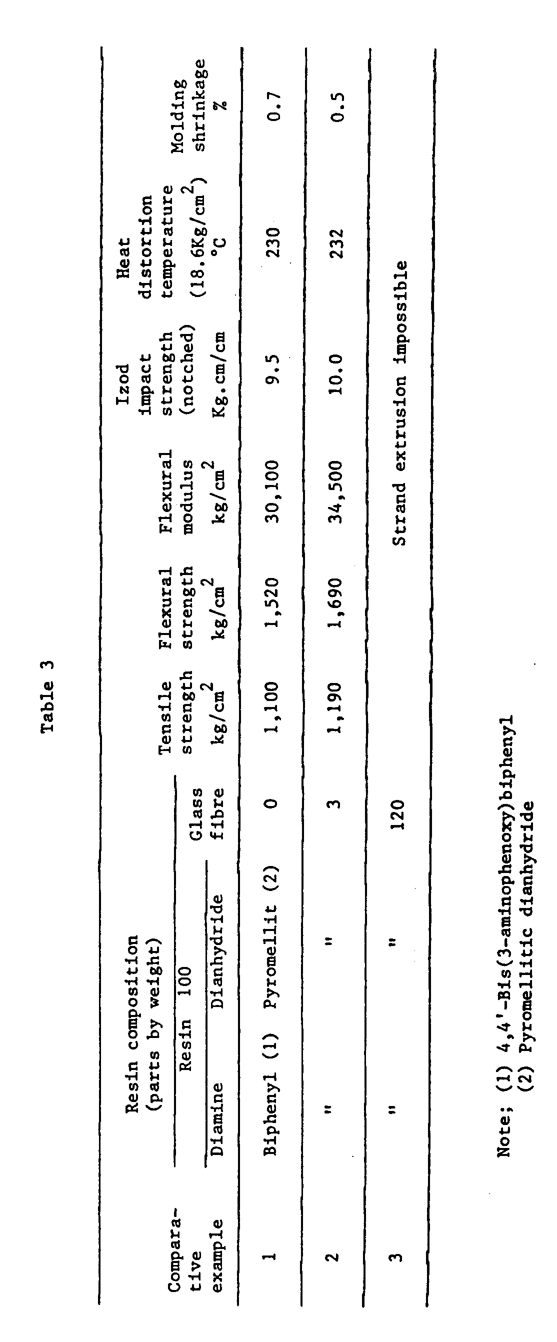

### Examples 12-17

To 100 parts by weight of the polyimide powder obtained by the procedure as in Example 1, carbon fibre having an average diameter of 12 µm, a length of 3 mm and an aspect ratio of 250 (Trade Mark; Torayca, from Toray Industries) was added in the amount given for each Example in Table 4. After mixing in a drum blender (from Kawata Seisakusho), the resultant mixture was kneaded in the molten state at a temperature of 390°C in a single screw extruder having an aperture of 30mm. The strand thus formed was air cooled and cut into pellets.

The pellets obtained were injection molded with an Arburg injection molding machine having a maximum mold clamping force of 35 tons under the following conditions; injection pressure 500 kg/cm², cylinder temperature 400°C and mold temperature 180°C. Specimens were prepared and tested. The results are given in Table 4 for tensile strength, flexural modulus, flexural strength, notched Izod impact strength, heat distortion temperature and molding shrinkage.

### Example 18

To 100 parts by weight of the polyimide powder obtained by the procedure as in Example 1, 150 parts by weight of N,N-dimethylacetamide were added to make a suspension. The suspension had uniformly dispersed in it 30 parts by weight of carbon fibre having an average diameter of 12 microns, a length of 3mm and an aspect ratio of 250 (Trade Mark; Torayca from Toray Industries). After preliminary drying in a hot air oven at 200°C for 20 hours, the resultant mixture was further dried in a vacuum desiccator at 150°C for 5 hours under reduced pressure in order to completely remove the solvent. The polyimide impregnated carbon fibre product thus obtained was pelletized and injection molded by the same procedure as in Examples 12-17 to obtain specimens for testing as to their physical properties. The physical properties were tested as in Examples 12-17 and the results are given in Table 5.

### Examples 19-22 and Comparative Examples 4-6

30 Parts by weight of the same carbon fibre as used in Examples 12-17 were dipped into 400 parts by weight of the polyamic acid solution obtained by the procedure as in Example 1. Then the drying procedure of Example 18 was repeated to obtain a polyimide impregnated carbon fibre product. The product was processed for testing by the same procedures as in Example 18 and the results are given in Table 5.

In addition, results obtained by using the carbon fibre in amounts outside the scope of this invention are given in Table 6 as Comparative Examples.

Table 5 also gives the results obtained using the same amount of carbon fibre as in Example 19 with polyimides obtained from other diamines and tetracarboxylic dianhydrides as set out for Examples 20-22.

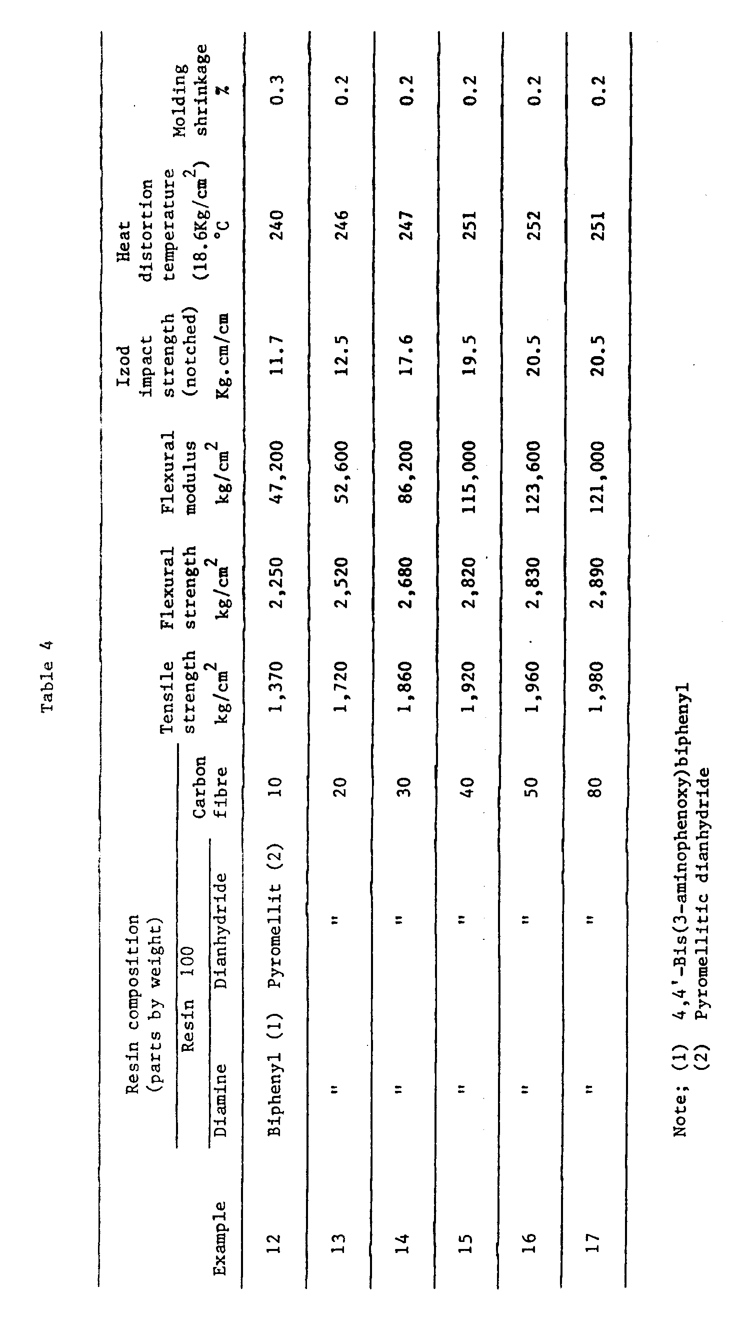

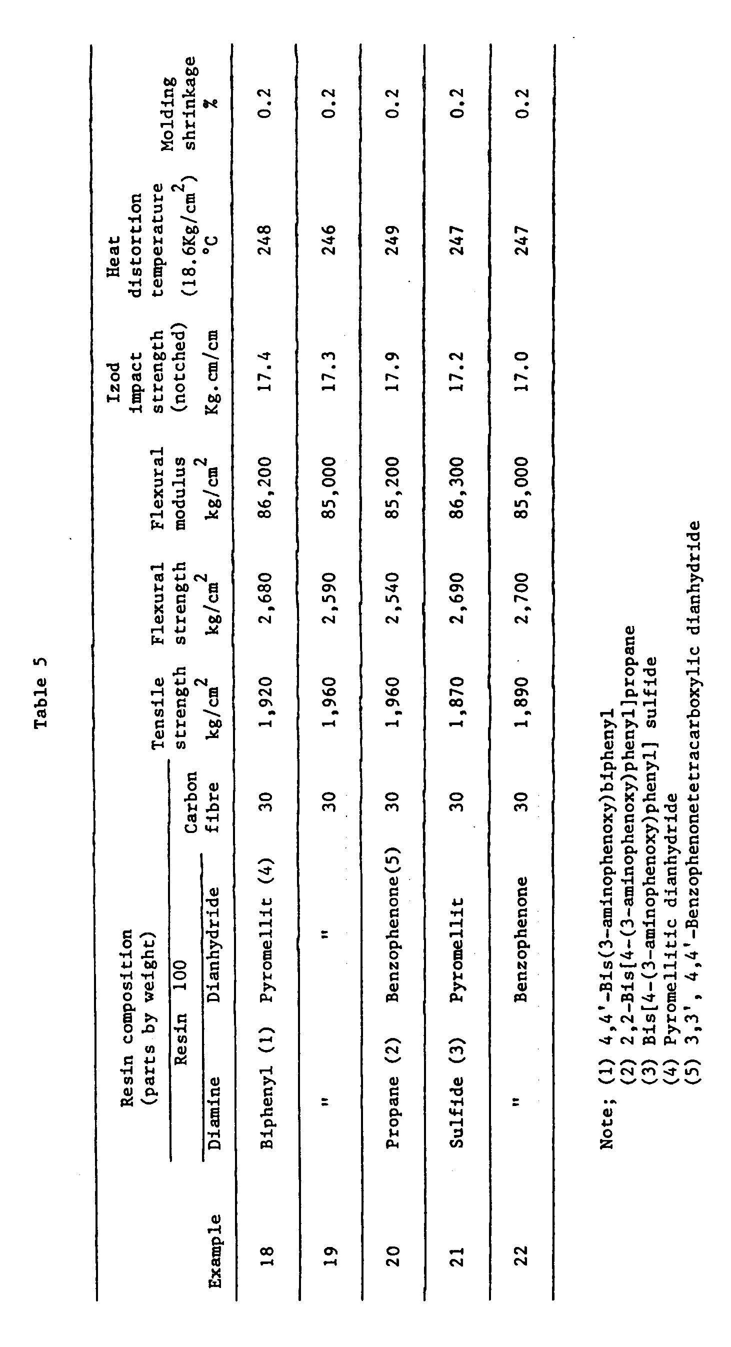

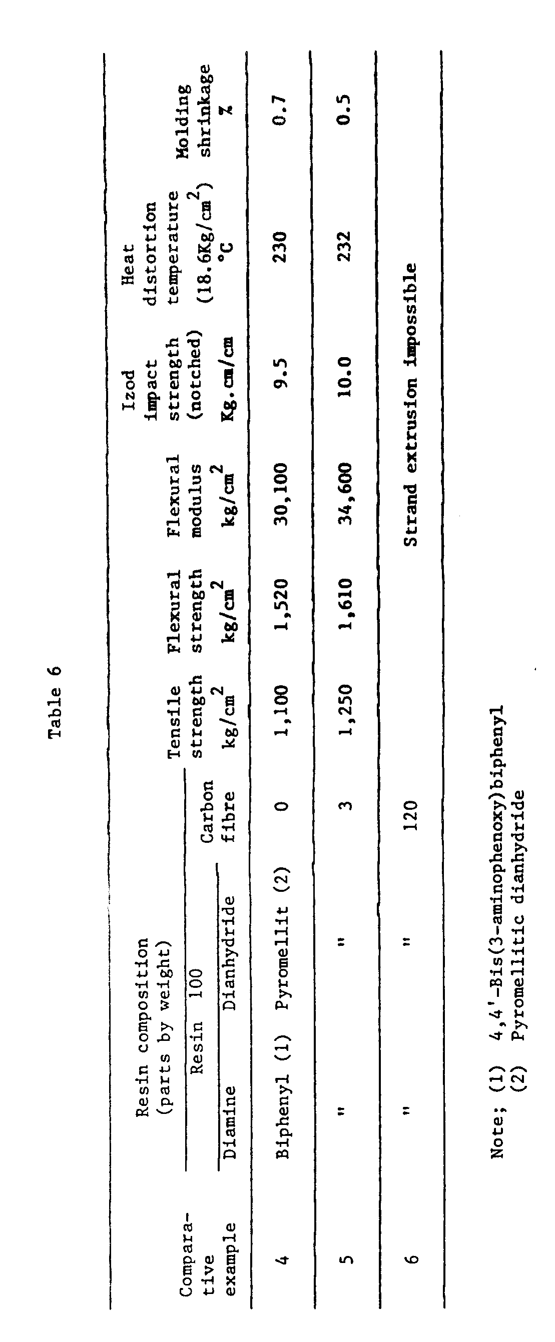

### Examples 23-27

To 100 parts by weight of the polyimide powder obtained by the procedure as in Example 1, potassium titanate fibre having a cross sectional diameter of 0.2 µm and an average length of 20 µm (Trade Mark; Tismo-D from Ohtsuka Chemicals) was added in the respective amount given in Table 7 for each of these Examples and the result mixed in a drum blender (from Kawata Seisakusho). The mixture was then kneaded in the molten state at a temperature of 390°C in a single screw extruder having an aperture of 30mm. The strand thus formed was air cooled and cut into pellets.

The pellets thus obtained were injection molded with an Arburg injection molding machine having a maximum mold clamping force of 35 tons under the following conditions; injection pressure 500 kg/cm², cylinder temperature 400°C and mold temperature 180°C. Specimens were prepared and tested. The specimen for measuring the molding shrinkage is a plate having the dimensions of 50 x 50 x 3 mm, a film gate having a thickness of 1 mm being provided in one side of 50mm. The flow direction of the molten material is indicated by MD (machine-direction) and the direction perpendicular to that is indicated by TD (transverse-direction). Table 7 shows tensile strength, flexural modulus, flexural strength, notched Izod impact strength, heat distortion temperature and molding shrinkage.

### Example 28

To 100 parts by weight of the polyimide powder obtained by the procedure as in Example 1, 150 parts by weight of N,N-dimethylacetamide were added to make a suspension. Uniformly dispersed in the suspension were 30 parts by weight of potassium titanate fibre having a cross sectional diameter of 0.2 µm and an average length of 20 µm (Trade Mark; Tismo-D, from Ohtsuka Chemicals). After preliminary drying in a hot air oven at 200°C for 20 hours, the resultant mixture was further dried in a vacuum desiccator at 150°C for 5 hours under reduced pressure in order to completely remove the solvent. The polyimide impregnated potassium titanate fibre thus obtained was pelletized and injection molded by the same procedure as in Examples 23-27 to obtain specimens for testing of the physical properties. The physical properties were examined by using these specimens and the results obtained are given in Table 8.

### Example 29

30 Parts by weight of the same potassium titanate fibre as used in Example 28 were dipped into 400 parts by weight of the polyamic acid solution obtained by the procedure as in Example 1. Then the drying procedure of Example 28 was repeated to obtain polyimide impregnated potassium titanate fibre. The fibre was processed by the same procedure as in Example 28 and the results are given in Table 8.

### Example 30-32 and Comparative Examples 7-9

To 100 parts by weight of the polyimide powder derived from the diamine and tetracarboxylic acid dianhydride which are given for each of Examples 30-32 in Table 8, the same potassium titanate fibre as used in Examples 23-27 was added in the amount shown in Table 8. The same procedures as in Examples 23-27 were then carried out to obtain the results given in Table 8.

In addition, Comparative Examples are given in Table 9 using amounts of the same fibre outside the scope of this invention.

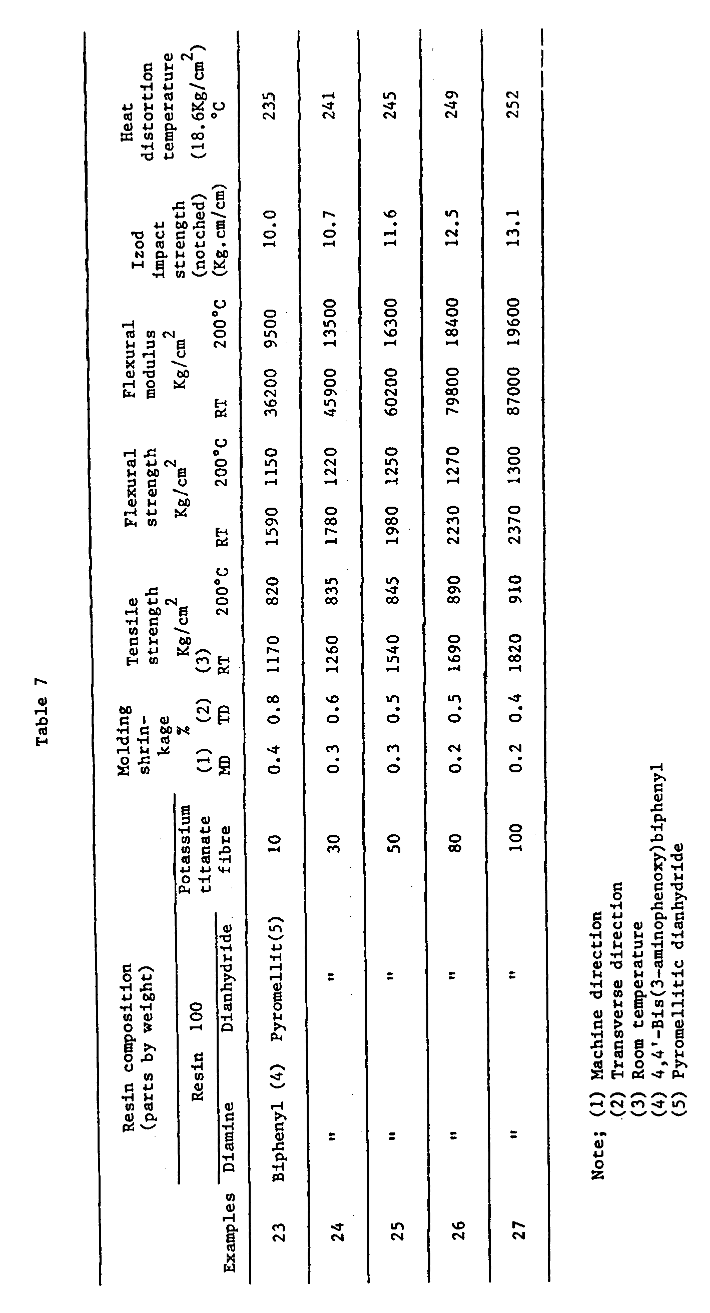

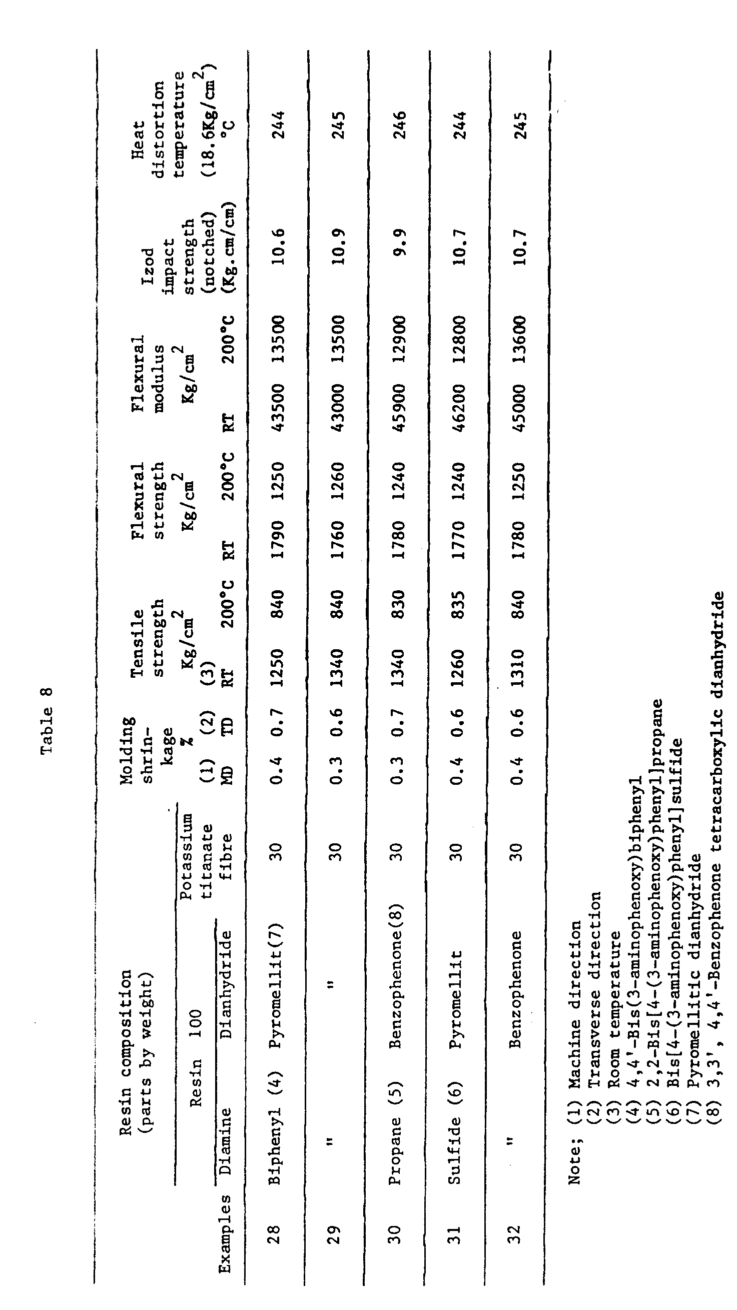

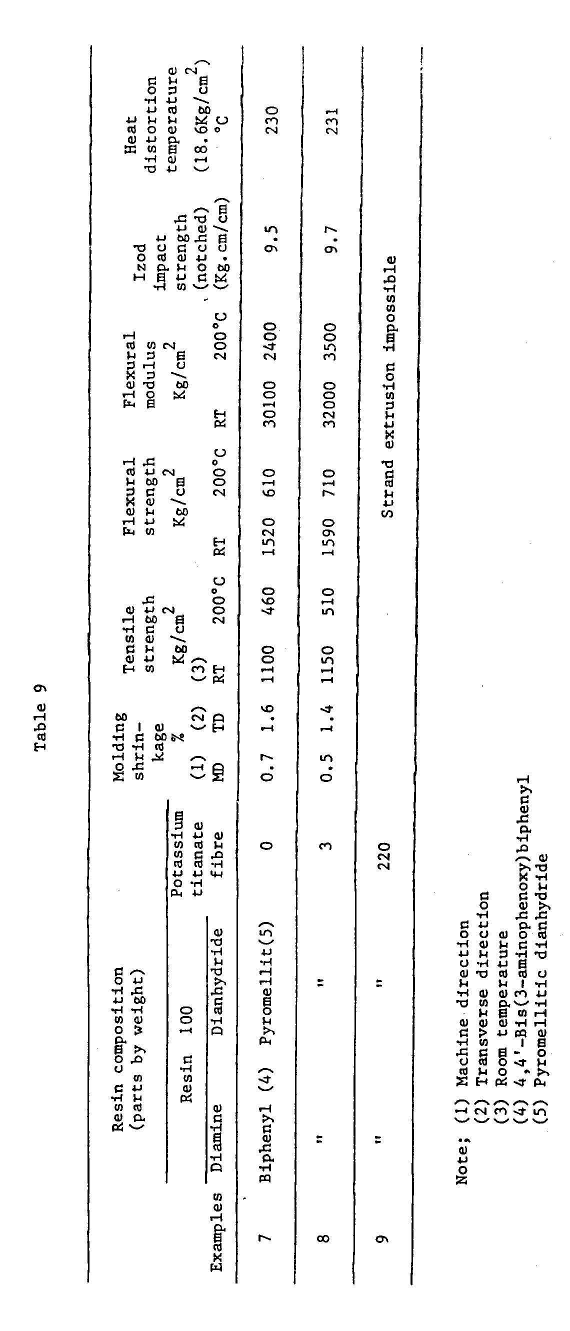

### Examples 33-38

To 100 parts by weight of the polyimide powder obtained by the procedure as in Example 1, aromatic polyamide fibre having an average length of 3mm (Trade Mark; Kevlar, from E.I. du Pont de Nemours & Co.) was added in the amounts given in Table 10 for each of these Examples and the result mixed in a drum blender (from Kawata Seisakusho). The mixture was then kneaded in the molten state at a temperature of 390°C in a single screw extruder having an aperture of 30mm. The strand thus formed was air cooled and cut into pellets.

The pellets thus obtained were injection molded with an Arburg injection molding machine having a maximum mold clamping force of 35 tons under the following conditions; injection pressure 500 kg/cm², cylinder temperature 400°C and mold temperature 180°C. Specimens were prepared for testing. Table 10 shows tensile strength, flexural modulus, flexural strength, notched Izod impact strength, heat distortion temperature and flowability.

The test result for the flowability in molding was obtained by using a spiral flow length having a width of 10 mm and a depth of 2.0mm under the aforesaid injection molding conditions, that is, injection pressure of 500 kg/cm², cylinder temperature of 400°C and mold temperature of 180°C.

### Example 39

To 100 parts by weight of the polyimide powder obtained by the procedure as in Example 1, 150 parts by weight of N,N-dimethylacetamide were added to make a suspension. Uniformly dispersed in the suspension were 30 parts by weight of aromatic polyamide fibre having an average length of 3mm (Trade Mark; Kevlar, from E.I. du Pont de Nemours & Co.). After preliminary drying in a hot air oven at 200°C for 20 hours, the resultant mixture was further dried in a vacuum desiccator at 150°C for 5 hours under reduced pressure in order to completely remove the solvent. The polyimide impregnated aromatic polyamide fibre product thus obtained was pelletized and injection molded by the same procedure as in Examples 33-38 to obtain specimens for testing of the physical properties. The physical properties were examined using these specimens and the results obtained are given in Table 11.

### Example 40

30 Parts by weight of the same aromatic polyamide fibre as used in Examples 33-38 were impregnated with 400 parts by weight of the polyamic acid solution obtained by the same procedure as in Example 1.

The drying and following procedures of Example 39 were repeated to obtain the results given in Table 11.

### Examples 41-43 and Comparative Examples 10-12

To 100 parts by weight of the polyimide powder derived from the diamine and tetracarboxylic acid dianhydride given for each of Examples 41-43 in Table 11, the same aromatic polyamide fibre as used in Examples 33-38 was added in the amount shown in Table 11. The same procedures as in Examples 33-38 were carried out to obtain the results given in Table 11.

In addition, Comparative Examples are given in Table 12 using amounts of the same fibre outside the scope of this invention.

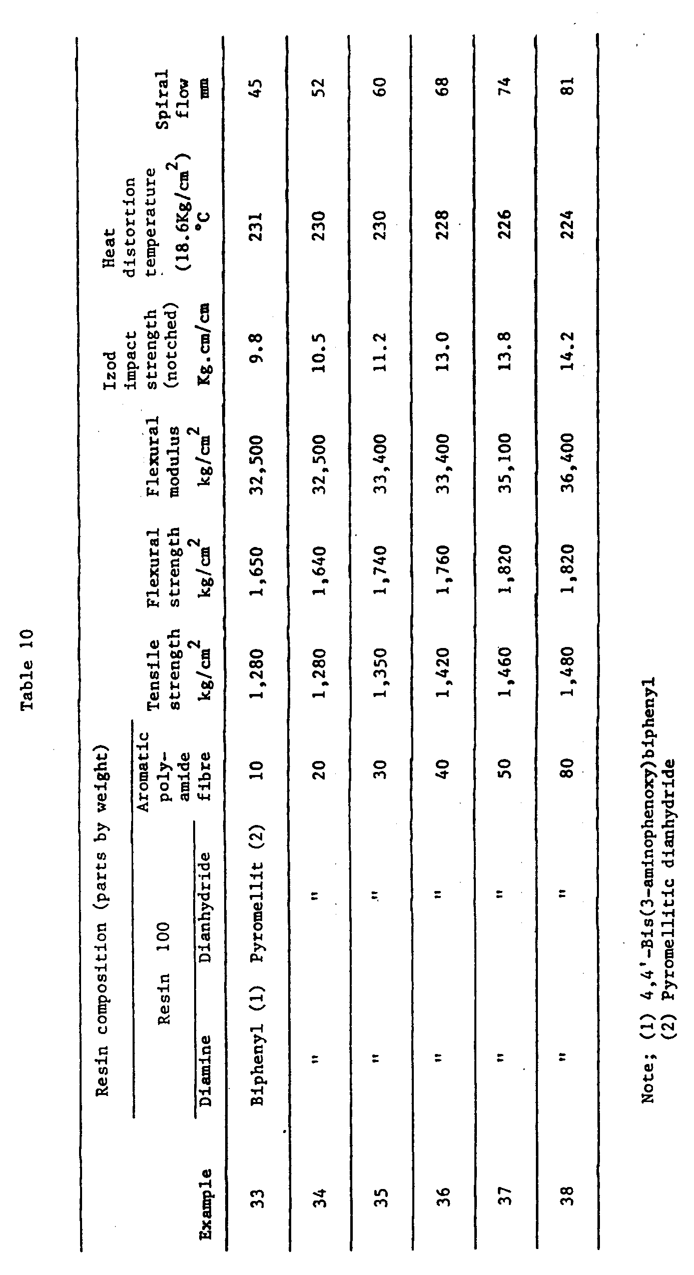

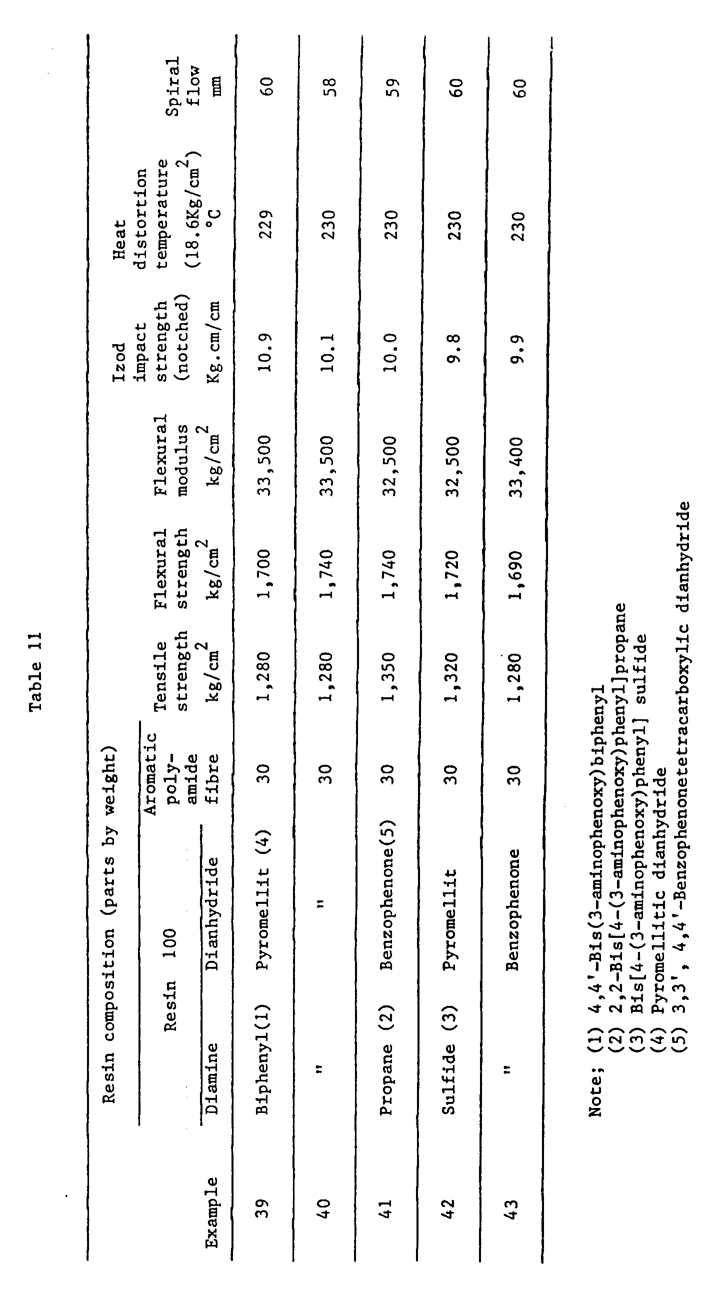

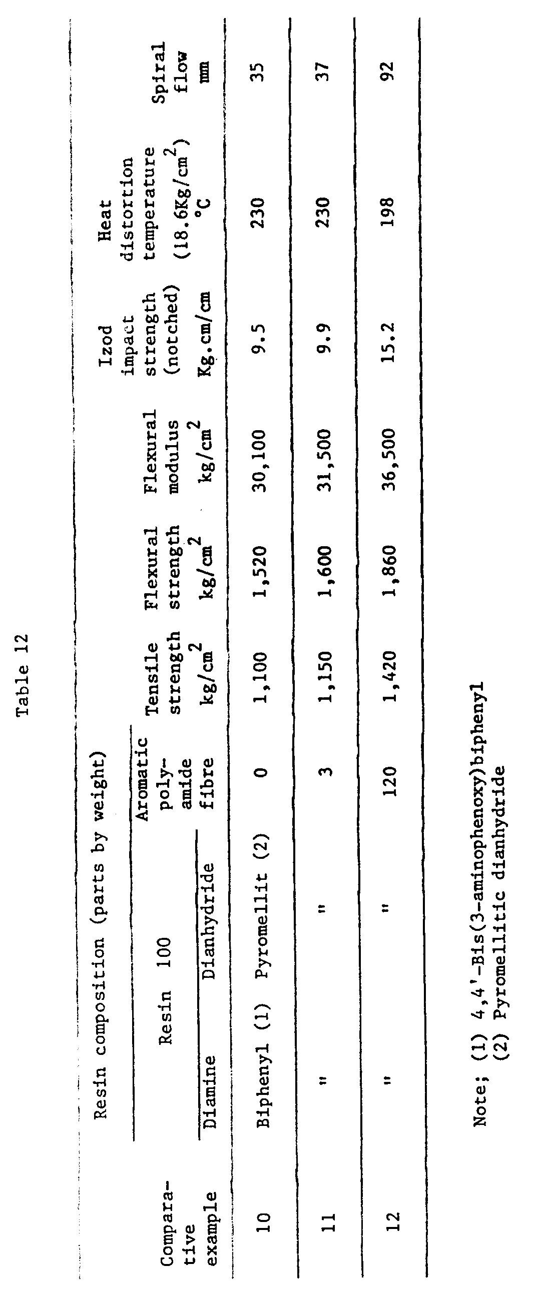

The polyimide resin composition of this invention has a high heat distortion temperature and further shows high-temperature stability, dimensional stability and mechanical strength. Thus the composition is a useful material for electrical and electronic devices, automotive parts and compounds for precision instruments.

## Claims

1. A polyimide resin composition which comprises 100 parts by weight of a polyimide having recurring units of the formula (1): 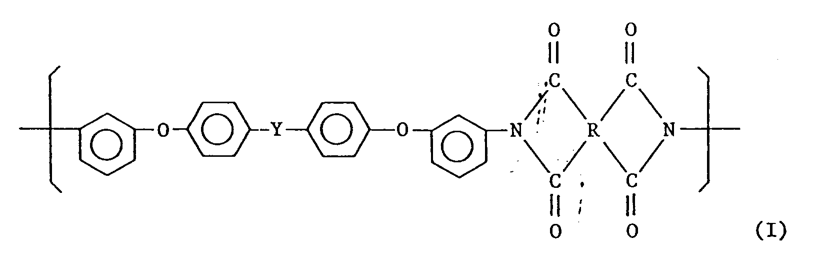 where Y is a direct bond, or a radical selected from divalent hydrocarbon radicals having from 1 to 10 carbons, hexafluorinated isopropylidene radicals, carbonyl radicals, thio radicals, sulfinyl radicals, sulfonyl radicals, and oxygen, and R is a tetravalent radical selected from aliphatic radicals having 2 or more carbons, cycloaliphatic radicals, monocyclic aromatic radicals, fused polycyclic aromatic radicals, and polycyclic aromatic radicals wherein the aromatic rings are connected to one another by a direct bond or by a bridging radical; the composition containing also a fibrous reinforcing material present in an amount of 5 to 100 parts by weight, except in the case of potassium titanate fibre for which the limits are 5 to 200 parts by weight.

2. The polyimide resin composition as claimed in Claim 1, wherein Y is an isopropylidene radical.

3. The polyimide resin composition as claimed in Claim 1, wherein Y is a direct bond and R is represented by the formula (II):

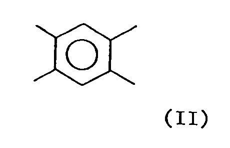

4. The polyimide resin composition as claimed in Claim 2, wherein R is represented by the formula (III):

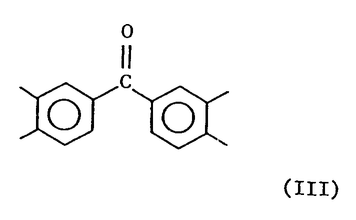

5. The polyimide resin composition as claimed in Claim 1, wherein Y is a thio radical and R is represented by the formula (II):

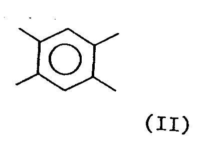

6. The polyimide resin composition as claimed in Claim 1, wherein Y is a thio radical and R is represented by the formula (III):

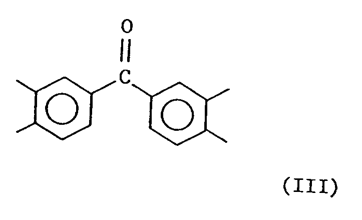

7. The polyimide resin composition as claimed in any of Claims 1 to 6, wherein the fibrous reinforcing material is glass fibre.

8. The polyimide resin composition as claimed in any of Claims 1 to 6, wherein the fibrous reinforcing material is carbon fibre.

9. The polyimide resin composition as claimed in any of Claims 1 to 6, wherein the fibrous reinforcing material is potassium titanate fibre.

10. The polyimide resin composition as claimed in any of Claims 1 to 6, wherein the fibrous reinforcing material is an aromatic polyamide fibre.

## Patentansprüche

1. Polyimide Harzverbindung, welche 100 Gew.-% eines Polyimids umfaßt, das wiederkehrende Einheiten der Formel (I) aufweist: 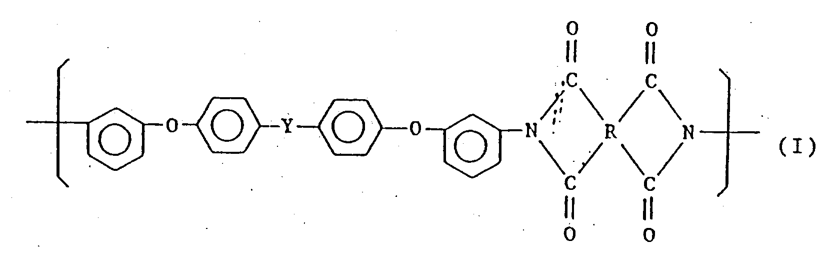 worin Y eine direkte Bindung oder ein Radikal ist, welches aus zweiwertigen Kohlenwasserstoffradikalen mit 1 bis 10 Kohlenstoffatomen, hexafluorinierten Isopropylidenradikalen, Carbonylradikalen, Thioradikalen, Sulfinylradikalen und Sauerstoff ausgewählt wird, und R ein vierwertiges Radikal ist, welches aus aliphatischen Radikalen mit zwei oder mehr Kohlenstoffatomen, zykloaliphatischen Radikalen, monozyklischen aromatischen Radikalen, kondensierten polyzyklischen Radikalen und polyzyklischen aromatischen Radikalen, bei denen die aromatischen Ringe miteinander durch direkte Bindung oder über eine Überbrückungsgruppe verbunden sind, ausgewählt wird, und welche ebenso ein faserförmiges Verstärkungsmaterial enthält, das in einer Menge Von 5 bis 100 Gew.-% vorhanden ist, außer im Fall von Kaliumtitanatfasern, für das die Grenzen 5 bis 200 Gew.-% sind.

2. Polyimide Harzverbindung nach Anspruch 1, worin Y ein Isopropylidenradikal ist.

3. Polyimide Harzverbindung nach Anspruch 1, worin Y eine direkte Bindung ist und R durch die Formel (II) dargestellt wird:

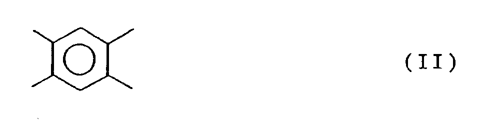

4. Polyimide Harzverbindung nach Anspruch 2, worin R durch die Formel (III) dargestellt wird:

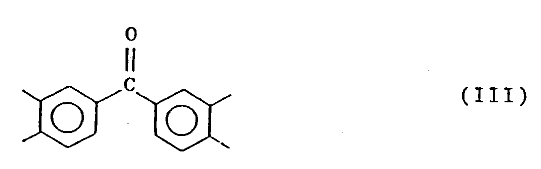

5. Polyimide Harzverbindung nach Anspruch 1, worin Y ein Thioradikal ist und R durch die Formel (II) dargestellt wird:

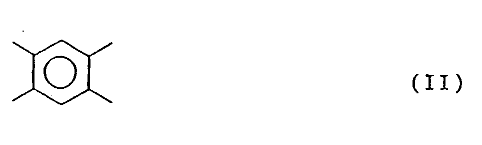

6. Polyimide Harzverbindung nach Anspruch 1, worin Y ein Thioradikal ist und R durch die Formel (III) dargestellt wird:

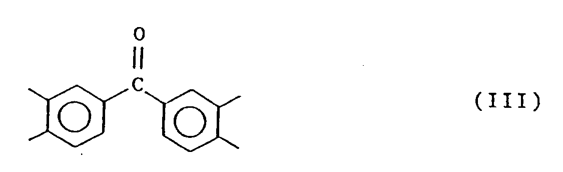

7. Polyimide Harzverbindung nach einem der Ansprüche 1 bis 6, worin das faserförmige Verstärkungsmaterial Glasfasern sind.

8. Polyimide Harzverbindung nach einem der Ansprüche 1 bis 6, worin das faserförmige Verstärkungsmaterial Kohlefasern sind.

9. Polyimide Harzverbindung nach einem der Ansprüche 1 bis 6, worin das faserförmige Verstärkungsmaterial Kaliumtitanatfasern sind.

10. Polyimide Harzverbindung nach einem der Ansprüche 1 bis 6, worin das faserförmige Verstärkungsmaterial aromatische Polyamidfasern sind.

## Revendications

1. Une composition de résine polyimide qui comprend 100 parties en poids d'un polyimide possédant des motifs récurrents de formule (1) : 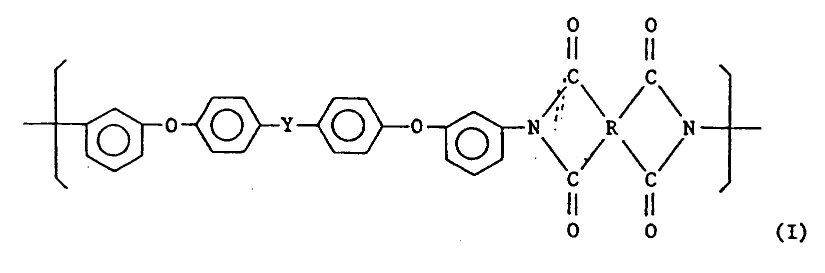 dans laquelle Y est une liaison directe ou un radical choisi parmi des radicaux hydrocarbonés divalents possédant de 1 à 10 atomes de carbone, des radicaux isopropylidène hexafluorés, des radicaux carbonyle, des radicaux thio, des radicaux sulfinyle, des radicaux sulfonyle et l'oxygène, et R est un radical tétravalent choisi parmi les radicaux aliphatiques possédant au moins deux atomes de carbone, des radicaux cycloaliphatiques, des radicaux aromatiques monocycliques, des radicaux aromatiques polycycliques condensés, et des radicaux aromatiques polycycliques dans lesquels les cycles aromatiques sont reliés les uns aux autres par une liaison directe ou par un radical de pontage; la composition contenant aussi un matériau de renforcement fibreux présent à raison de 5 à 100 parties en poids, sauf dans le cas d'une fibre de titanate de potassium pour laquelle les limites vont de 5 à 200 parties en poids.

2. La composition de résine polyimide telle que revendiquée dans la revendication 1, dans laquelle Y est un radical isopropylidène.

3. La composition de résine polyimide telle que revendiquée dans la revendication 1, dans laquelle Y est une liaison directe et R est représenté par la formule (II):

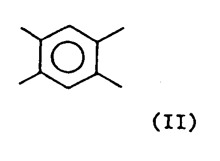

4. La composition de résine polyimide telle que revendiquée dans la revendication 2, dans laquelle R est représenté par la formule (III):

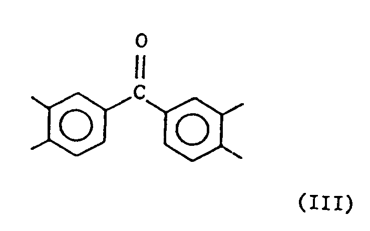

5. La composition de résine polyimide telle que revendiquée dans la revendication 1, dans laquelle Y est un radical thio et R est représenté par la formule (II):

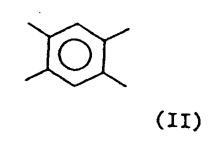

6. La composition de résine polyimide telle que revendiquée dans la revendication 1, dans laquelle Y est un radical thio et R est représenté par la formule (III):

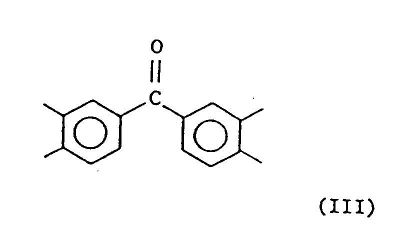

7. La composition de résine polyimide telle que revendiquée dans l'une quelconque des revendications 1 à 6, dans laquelle la matière fibreuse de renforcement est de la fibre de verre.

8. La composition de résine polyimide telle que revendiquée dans l'une quelconque des revendications 1 à 6, dans laquelle la matière fibreuse de renforcement est une fibre de carbone.

9. La composition de résine polyimide telle que revendiquée dans l'une quelconque des revendications 1 à 6, dans laquelle la matière fibreuse de renforcement est une fibre de titanate de potassium.

10. La composition de résine polyimide telle que revendiquée dans l'une quelconque des revendications 1 à 6, dans laquelle la matière fibreuse de renforcement est une fibre de polyamide aromatique.
